Europäisches Patentamt

(19) European Patent Office

Office européen des brevets

(11) Publication number : **0 454 666 B1**

(12) **EUROPEAN PATENT SPECIFICATION**

(45) Date of publication of patent specification :
15.11.95 Bulletin 95/46

(51) Int. Cl.$^6$ : **G02B 1/10, C23C 14/34**

(21) Application number : **89901915.2**

(22) Date of filing : **23.01.89**

(86) International application number :
**PCT/US89/00274**

(87) International publication number :
**WO 90/08334 26.07.90 Gazette 90/17**

(54) **MULTILAYER HEAT-REFLECTING COMPOSITE FILMS AND GLAZING PRODUCTS CONTAINING THE SAME.**

(43) Date of publication of application :
06.11.91 Bulletin 91/45

(45) Publication of the grant of the patent :
15.11.95 Bulletin 95/46

(84) Designated Contracting States :
**AT BE CH DE FR GB IT LI NL SE**

(56) References cited :
**US-A- 3 682 528**
**US-A- 3 846 152**
**US-A- 4 799 745**

(73) Proprietor : **Southwall Technologies, Inc.**
**1029 Corporation Way**
**Palo Alto California 94303 (US)**

(72) Inventor : **MEYER, Stephen, F.**
**369 Twin LaneDrive**
**Soquel, , CA 95070 (US)**
Inventor : **HOOD, Thomas, G.**
**2814 Pine street**
**San Francisco, CA 94115 (US)**

(74) Representative : **Goldin, Douglas Michael et al**
**J.A. KEMP & CO.**
**14, South Square**
**Gray's Inn**
**London WC1R 5LX (GB)**

EP 0 454 666 B1

EP 0 454 666 B1

## Description

Background of the Invention

### 1. Field of the Invention

This invention relates to the formation of heat-reflecting films. More particularly, it relates to the formation of composite films comprising a series of dielectric and metal layers so as to create an infrared reflecting interference filter and to the use of such films in window glazing materials.

### 2. Description of the Prior Art

In the 1890s, Fabry and Perot developed an interferometer consisting of a pair of parallel-sided, half-silvered mirrors separated by a nonabsorbing layer. This device had the property of preferentially passing energy of certain wavelengths and reflecting energy of other wavelengths. An embodiment of this principle known as the Fabry-Perot sandwich consists of two more or less transparent metal layers separated by a dielectric spacer layer. (See, for example, Knittl, Zdenek, OPTICS OF THIN FILMS, John Wiley & Sons,Ltd., London, 1976, at page 284.) Other filter products known as "induced transmission filters" have been constructed of metal-dielectric sandwiches for use in window glazing structures. One such structure is described in US-A-4,337,990 of Fan as consisting of a transparent substrate, overlayered with a phase matching layer, a single metallic silver layer and an outer antireflection layer, with the three overlayers constituting a transparent heat reflector. While generally effective, products of this general structure suffer from the disadvantage that to achieve high levels of heat reflection they must have relatively thick metal layers such as 15 to 25 nm in thickness which tend to have low transmittances of visible radiation, as well.

Another system which used a Fabry-Perot approach to achieve heat reflection while transmitting visible radiation is shown in US-A-3,682,528 of Apfel and Gelber. In this system, thinner layers of metal are employed but it is taught that to obtain such layers of an optically suitable metal, in particular silver, it is necessary to first lay down a thin "nucleation" precoat layer of nickel by vacuum deposition and then apply the silver to it, again by vacuum deposition methods. It is further taught that the deposited silver must then receive a thin postcoat layer of vapor-deposited nickel if another layer is to be applied over it. These extra coatings with nickel are time consuming and economically unattractive. This patent also discloses a filter having two silver layers but shows that each silver layer must be accompanied by one or two nickel layers and suggests only durability advantages to this more involved structure. The substrate upon which this multilayer heat-reflecting film was constructed most commonly was glass. In one aspect this invention provides an improved version of Fabry-Perot-based glazings which need not contain these added protective layers.

It is also recognized that a wavelength selective filter can be achieved with a stack of alternating high/low index of refraction dielectrics. This would work but would require a large number of layers and be prohibitively expensive. This would not have the capability of low emissivity either.

In preferred embodiments,this invention avoids other difficulties found in the application of the Fabry-Perot approach to glazing products. While as a general class these materials perform the task of heat rejection with admirable efficiency, in some settings they present a strong color cast to their reflection when viewed from the incident light direction. This strong color is often objected to by some consumers. It is a preferred object of this invention to correct this failing in heat reflective glazings.

Another desired property of reflective glazing is that the appearance does not change as a function of viewing angle. This absence of angle sensitivity has not been easily achievable with prior materials used in Fabry-Perot configurations.

In studying glazing materials employing these heat-reflecting filters we have discovered a number of configurations for plate glass and anti-lacerative glass which optimize the effectiveness of the filter systems and/or simplify their fabrication. These glass configurations find application in automotive and architectural settings. In some automotive settings, there is a desire to reflect as much heat as possible, but this must be done within the confines of various regulations setting light transmission limits and the like. For example, in the United States, automotive windshields must have a transmission of visible light of at least 70% at normal incidence. The present invention can serve these needs.

### Summary of the Invention

It is a general object of this invention to provide an improved glazing material employing a Fabry-Perot interference filter. In some embodiments, these Fabry-Perot filters are characterized by a simpler construction

2

than materials employed heretofore. In other embodiments which are often preferred, this filter is constructed such that, when laminated into a sandwich structure, it does not substantially alter the color of incident light reflected from its surface and is thus relatively color neutral.

It is a further general object of this invention to provide an improved transparent Fabry-Perot filter stack which will selectively reflect heat, that is, infrared radiation, while giving high transmission of the visible wavelengths preferably with a color-neutral appearance.

It is also an object to provide filter stacks which are designed to take into consideration the optical properties of the substrate (for example, glass or plastic) upon which they are deposited or to which they are laminated, and incorporate these substrates into an overall product having the desired wavelength selectivity, color neutrality and high visible transmission and uniform color reflection.

It is also an object in certain embodiments of this invention to provide a heat-reflecting, color-neutral transparent film which is plastic backed and has enhanced durability and scratch resistance.

It is an additional object to provide glazing structures incorporating these heat-reflecting, color-neutral filters and/or transparent films.

It is a further object of this invention to provide glass-filter composites which offer optimal heat-rejection characteristics.

It has now been found that these and and other related objects are achieved by employing in such films a Fabry-Perot filter incorporating a plurality and preferably three or more layers of transparent metal separated from one another by spacer layers of dielectric.

Thus one aspect of this invention provides the method of claim 1.

The infra-red reflecting composite produced by the method of this invention can be embodied in many forms. It can take the form of glass or plastic-supported sheets which may be interposed or laminated within or applied to transparent window glazing materials. It may take the form of a thin metal-dielectric multilayer sandwich film laid down directly onto a glazing material substrate. In such applications the films may contain additional layers such as hardcoats.

## Detailed Description of the Invention

### Brief Description of the Drawings

In the drawings:

Figs. 1A and 1B are schematic cross-sectional views of two simple heat-reflecting filters formed by the method of this invention employing two and three transparent layers of metal, respectively;

Fig. 2 is a schematic cross-sectional view of a simple four-metal-layer heat reflector film formed by the method of this invention;

Fig. 3 is a schematic cross-sectional view of a heat reflector film formed by the method of this invention, such as shown in Fig. 1, having a physical protection layer covering its Fabry-Perot filter;

Fig. 4 is a schematic cross-sectional view of a heat reflector film formed by the method of this invention, such as shown in Fig. 1, having an optional hardcoat layer on its transparent support and adhered to an additional transparent substrate via its filter layer stack which could serve as window glazing;

Fig. 5 is a schematic cross-sectional view of a filter as shown in Fig. 1 interposed between two rigid substrates such as glass;

Fig. 6 is a schematic cross-sectional view of a product as shown in Fig. 5 additionally including an antilacerative plastic layer for use in windshields and the like;

Fig. 7 is a schematic cross-sectional view of a film such as shown in Fig. 1 adhered to an additional transparent substrate via its support layer. This too could serve as window glazing;

Fig. 8 is a cross-sectional view of a laminated window glazing in which a film formed by the method of the invention is laminated between two sheets of transparent substrate;

Figs. 9a, b and c are three cross-sectional views illustrating three film materials prepared in the Example;

Fig. 10 is a graph illustrating for comparison purposes the performance of a prior art reflecting film;

Fig. 11 is a graph illustrating the performance of a reflecting film having two transparent metal layers;

Fig. 12 is a graph illustrating the improved performance of a reflecting film formed by the method of this invention having three transparent metal layers;

Fig. 13 is an expanded-scale graph illustrating the spectral properties (transmittance, reflectance, and absorption) of an excellent laminated product incorporating a reflecting film having three transparent metal layers;

Fig. 14 is a color coordinant chart showing the color properties of filters formed by the method of this invention using the CIE L*a*b* system; and

Fig. 15 is a cross-sectional view of a flexible film-substrated filter formed by the method of this invention employed as a suspended film in a double-pane window glazing structure.

Description of Preferred Embodiments

Definitions

As used in this specification and the appended claims, the following terms have defined meanings:

"Color neutral" and "color neutrality" are used herein in the normally accepted sense. That is, these terms mean that a laminated product of this invention has a reflectivity which is substantially invariant as a function of wavelength throughout the visible part of the spectrum and preferably independent of the angle of incidence. In preferred embodiments, the laminated product has a neutral transmitted color. This will follow if there is no wavelength-selective absorption.

"Visible radiation" or "light" means electromagnetic radiation having a wavelength of from 380 nanometers to 750 nanometers. (CIE Standard)

"Infrared radiation" or "heat" means electromagnetic radiation having a wavelength above 750 nanometers.

"Transparent" means having the property of transmitting visible radiation unless otherwise stated.

"Tvis" or "Tv" or "Transmittance visible" each refer to a measure of transmittance over the visible wavelength. It is an integrated term covering the area under the transmittance vs. wavelength curve throughout the visible wavelengths. (1931 CIE Illuminant C Standard). In automotive windshield glazing, Tvis should be 70% or greater.

"Tsol" or "Ts" or "Transmittance solar" each refer to a measure of transmittance over all solar energy wavelengths. (ASTM E 424A) It is an integrated term covering the area under the transmittance vs. wavelength curve for both visible and infrared wavelengths. In heat reflecting films and glazings incorporating them it is a primary goal to decrease Tsol while maintaining Tvis as high as possible.

"SC" or "Shading Coefficient" is an accepted term in the field of architecture. It relates the heat gain obtained when an environment is exposed to solar radiation through a given area of opening or glazing to the heat gain obtained through the same area of 1/8 inch single pane clear glass. (ASHRAE Standard Calculation Method) The clear glass is assigned a value of 1.00. An SC value below 1.00 indicates better heat rejection than single pane clear glass. A value above 1.00 would be worse than the baseline clear single pane. A similar term is "$R_{sol}$" or "reflectance, solar", which is measure of total reflectance over the solar energy wavelength.

"Transparent metal layers" are homogeneous coherent metallic layers composed of silver, gold, platinum, palladium, aluminum, copper or nickel and alloys thereof of a thickness which permits substantial tranparency.

"Sputter deposit" or "sputter-deposited" refers to the process or the product of the process in which a layer of material is laid down by the use of a magnetron sputterer.

"Dielectrics" are nonmetallic materials which are transparent to both visible and infrared radiation. Generally, these materials are inorganic oxides but other materials such as organic polymers may be included as well.

"Contiguous" has its usual meaning of being in actual contact, i.e. of being adjoining. From time to time the somewhat redundant term "directly contiguous" is used for emphasis or clarification and has an identical meaning.

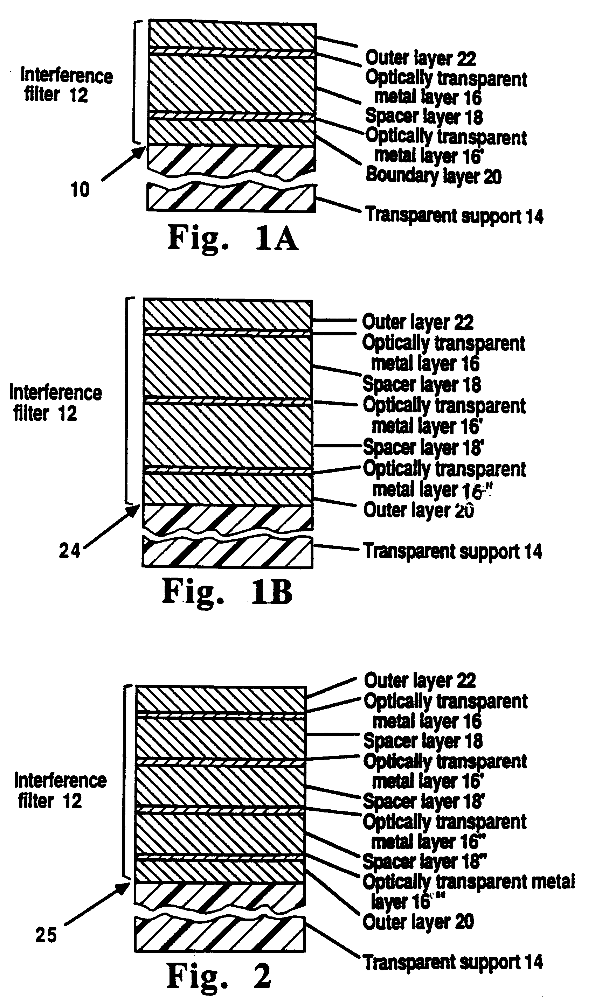

A "spacer layer" is a dielectric layer located between and contiguous with two transparent metal layers. In Fig. 1, 18 is a spacer layer.

A "boundary layer" is a layer contiguous with one and not two transparent metal layers. In Fig. 1, 20 and 22 are boundary layers.

Description of Filters

The present invention involves the formation of heat reflecting filters. A basic embodiment of these filters is shown as film 10 in Fig. 1A and as film 24 in Fig. 1B. Films 10 and 24 include a multilayer interference filter 12 directly adhered to a transparent support 14. Filter 12 operates according to the Fabry-Perot principle and includes two or three transparent metal layers 16, 16' and 16" separated by spacer layers 18 and 18' and bonded by two outer or boundary layers 20 and 22. Thus, it presents one or two cavities between metal layers. Fig. 2 shows a three-cavity film 25.

The transparent metal layers are sputter-deposited. In addition, the spacer and boundary layers can be directly contiguous with the transparent metal layers. No nucleation layers are required when the transparent metal layers are sputter deposited.

As will be seen with reference to Figs. 1A, 1B and 2, two, three or more than three transparent metal layers such as 16, 16′, 16″ and 16‴, each separated from one another by a spacer layer such as 18, 18′ and 18″ can be employed. In theory, there is no limit to the number of transparent metal layers that can be used in these sandwich filters. In practice, however three to five transparent metal layers are preferred, with three transparent metal layers being more preferred.

The thickness of the various layers in the filter should be controlled to achieve an optimum balance between desired infra-red reflectance and desired visible radiation transmittance. The ideal thicknesses can also depend upon the nature of the transparent metal and dielectric employed.

Each of the transparent metal layers 16, 16′ and 16″ is from about 4 to about 40 nanometers (nm) in thickness, with the total thickness of metal generally being from about 12 to about 80 nm. With silver and silver alloyed with up to about 25% w of gold, which constitute preferred transparent metals, excellent results are obtained with three or four layers of metal, each from 4 to 17 nm in thickness especially from about 5 to about 13 nm.

In Figs. 1A and 1B, the transparent metal layers are depicted as of equal thickness. This is not a requirement of the present invention. Best results have been achieved with three-layer systems when the middle of the three metal layers is about 5% to 15%, especially about 10% thicker than each of the outer layers.

The metal layers can be deposited by vapor deposition methods, electron-beam deposition, and the like. Magnetron sputtering is the preferred deposition method, but any methods which can deposit 10 nm layers with 2-3% accuracy in theory can be used.

The spacer layers, eg., 18 and 18′, between the transparent metal layers, e.g., 16, 16′ and 16″, can be the same or different and are each between about 30 and about 200 nm in thickness. The preferred thicknesses selected within this range will depend upon the index of refraction of the dielectric employed. Index of refraction values can be from about 1.4 to 2.7. In a general relationship, thicker layers are called for with low index material while thinner layers are used with higher index material. Spacer layers are preferably from about 50 to about 110 nm and especially from about 70 to about 100 nm in thickness for dielectrics having an index of refraction of from about 1.75 to about 2.25. Materials having an index of refraction within this range include the inorganic dielectrics such as metallic and semimetallic oxides, for example zinc oxide, indium oxide, tin oxide, titanium dioxide, silicon oxide, silicon dioxide, bismuth oxide, chromium oxide, as well as other inorganic metal compounds and salts, for example zinc sulfide and magnesium fluoride and mixtures thereof. Of these materials, preference is given to zinc oxide, indium oxide, tin oxide and mixtures thereof and titanium dioxide.

With materials having indices of refraction in the 1.4 to 1.75 range, spacer thicknesses are somewhat thicker. Suitable thicknesses in this embodiment are from about 75 to about 200 nm with thicknesses from about 100 to about 175 nm being preferred. Materials having these indices of refraction include hydrocarbon and oxyhydrocarbon organic polymers (1.55-1.65 index of refraction) and fluorocarbon polymers (1.35-1.45 index of refraction).

With materials having indices of refraction in the 2.25 to 2.75 range, spacer thicknesses are somewhat thinner. Suitable thicknesses in this embodiment are from about 30 to about 90 nm with thicknesses from about 30 to about 80 nm being preferred. Materials having these indices of refraction include lead oxide, aluminum fluoride, bismuth oxide and zinc sulfide.

Other typical inorganic dielectrics and their indexes of refraction are listed in sources such as Musikant, Optical Materials, Marcel Dekker, New York, 1985, pp. 17-96, and may be used.

As will be described below, the inorganic metallic and semimetallic oxide dielectrics can be conveniently and preferably deposited by reactive sputtering techniques, although, if desired, chemical vapor deposit and other physical vapor deposition methods can be employed to apply the dielectric layers.

Filters 12, 24 and 25 in Figs. 1A, 1B and 2 are depicted with two boundary layers 20 and 22. These layers provide physical protection to the metal layers beneath them and also serve to reduce visual reflections off the metal surface to which they are contiguous. It is preferred to have a symmetric sandwich with boundary layers on both outside surfaces. This will give rise to a series of two or more sequential Fabry-Perot interference filters each of the filters comprising a continuous discrete sputter-deposited solar transparent metal layer directly sandwiched between continuous layers of dielectric.

However, if desired, one or both of the boundary layers can be omitted. The boundary layers can be the same or different dielectric and can be identical to or different than the dielectric making up the spacers. The same preferences for materials recited for the spacer apply to the boundary layers and, for simplicity, it is preferred if the boundary layers and the spacer layers are all made of the same materials and if they are all sputter-deposited.

The thicknesses of the boundary layers range from about 20 nm to about 150 nm. Boundary layers are preferably from about 25 to about 90 nm and especially from about 30 to about 70 nm in thickness for dielectrics having an index of refraction of from about 1.75 to about 2.25. With materials having indices of refraction in the 1.4 to 1.75 range, preferred thicknesses are from about 30 to about 140 nm and especially from about 45 to about 100 nm. If, as shown in Fig. 2, three or more transparent metal layers are employed, the boundary layers will remain substantially unchanged.

To sum up the geometry of the presently preferred filters, they have 7 layers arranged in a stack as follows:

Boundary dielectric
Metal layer I
Spacer layer I
Metal layer II
Spacer layer II
Metal layer III
Boundary dielectric

In this preferred configuration the three metal layers are preferably silver and total from 25 to 35 nm in thickness with metal layer II being 110% % 5% of the metal layers I or III. The boundary layers and spacer layers are preferably indium oxide with boundary layer thicknesses of from 30 to 40 nm and spacer thicknesses of from 60 to 80 nm.

In a five-layer film, metal layer II and spacer II might be omitted.

Supporting the Filter

In each of Figs. 1 through 6, the Fabry-Perot type filter is shown directly adhered to a transparent support 14. This support is shown in broken section because it is many times thicker than the filter. This thick support is essential to the practice of this invention. The filter itself is at most only a few hundred nanometers thick and thus can have only minimal physical strength without the added support. Support 14 can be selected from among the rigid and nonrigid but minimally stretchable transparent solids which can withstand the conditions of sputter deposition. Glass, both float or plate glass and laminated glass and especially low iron float glass, and rigid plastics, such as poly(carbonate) and poly(acrylate) in thicknesses from about 50 mils to about 5 cm or more are representative examples of rigid supports. Poly(ester)s including poly(ethylene terphthalate) and other terphthalate ester polymers, poly(urethanes), cellulose ester polymers, acrylic polymers, and poly(vinyl fluoride)s from about 1 or 2 mils to about 50 mils in thickness are representative examples of nonrigid, minimally stretchable films which may be employed. Poly(esters) and in particular poly(ethylene terphthalates) such as the DuPont "Mylars" are a preferred group of film supports.

The filter 12 is directly adhered to the support 14. This can be carried out by sequentially applying the various layers of the filter directly to the support. If the layers are applied by sputter deposition, this can involve first sputter depositing a boundary layer, then a transparent metal layer, a spacer layer, etc.

The macroscale transparent layers, be they a plastic or glass transparent support or an additional component (such as a glass layer laminated to a plastic supported film), do contribute to the performance and visual optics of the final product as will be shown in the examples.

Optical Properties

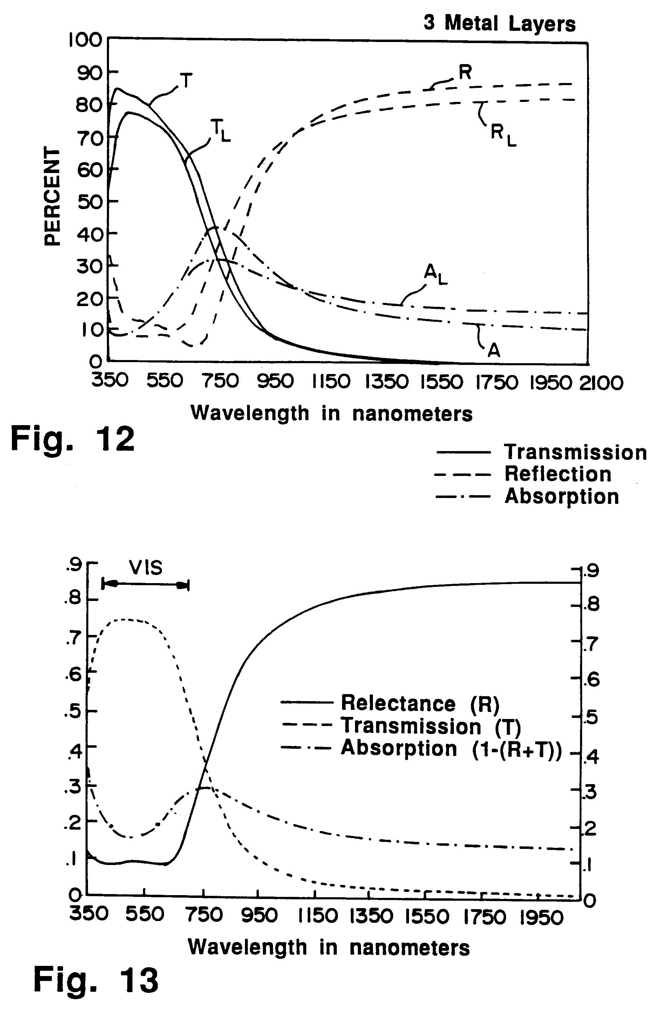

In some settings, the desired optical properties include maximum rejection (reflection) of heat (infrared wavelengths) with only less attention being paid to the amount of visible light transmitted or reflected. In other applications specific degrees of visible light transmittance must be attained to meet government regulations, for example, in auto windshields the Tvis must be 70% or greater. Fig. 13 illustrates an excellent reflectance curve for such a product. In this product, reflectance is substantially constant at about 10% (i.e., the reflectance curves is substantially flat throughout the wavelengths between 350 nm and 700 nm. This means that the reflectance off of this product would be neutral in color without the strong tint that can be found objectionable. In this product, the reflectance increases substantially at the wavelengths outside the visible range to achieve good thermal rejection.

As previously noted, the present invention permits one to control the color of reflectance off the filter. In many cases the property is used to attain color neutrality. With colored light this means a colored reflection or with white light a neutral reflection. This feature can be quantitated by the CIE L*a*b* 1976 color coordinate system, in particular the ASTM 308-85 method.

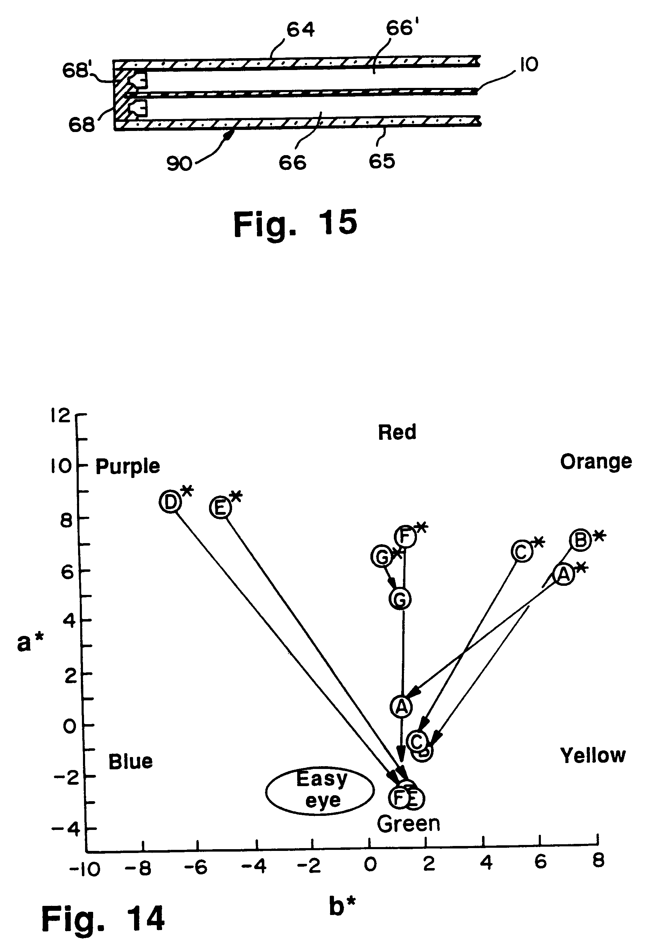

Using the L*a*b* system the property is shown by values for a* and b* near O for example a* from -4 to +1 and b* from -2 to +2 when using an Illuminant A light source. Fig. 14 is a L*a*b* color coordinant chart which shows the desired color coordinates and defines the desired color space.

This neutral color can also be illustrated by the shape of the absorbance/reflectance vs. wavelength curve. As shown in Fig. 13, products of this invention can achieve excellent constant low reflectances throughout the visible spectrum. One can judge the quality of a product's color neutrality by the flatness of the reflectance curve over the visible spectrum as shown in that Figure.

In general, it will be observed that when the multimetal layer films formed by the method of this invention are laminated to or between glass and/or plastic layers the overall optical properties are different than the properties observed with the unlaminated films. One achieves optical properties approaching the optimum in ways not easily achieved by less complicated filter stacks. In particular, one can achieve laminated filter products having high Tvis/Tsol selectivity, neutral color, excellent heat rejection, high Tvis, high Rsol and an emissivity of less than 0.1.

## Incorporation into Glazing Structures

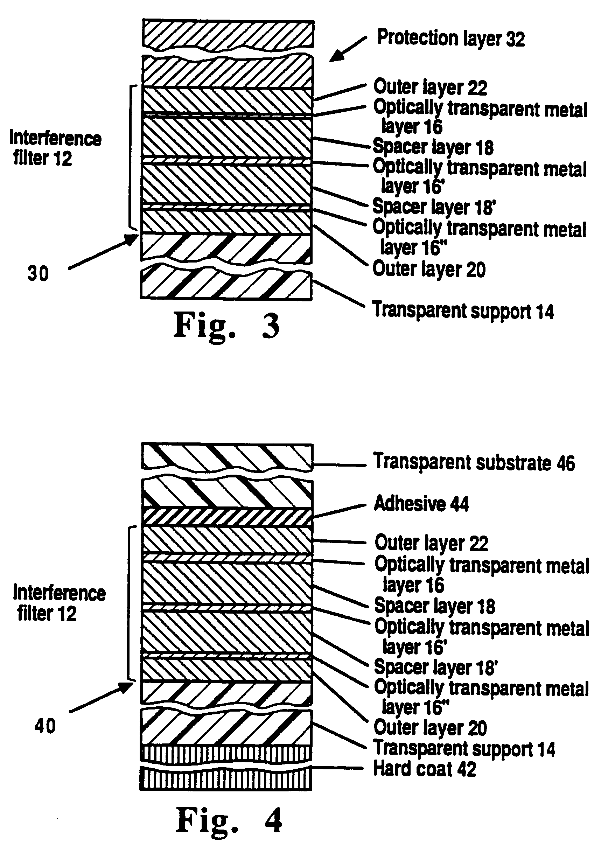

As may be seen by referring to Figs. 3 through 9, the multi-metal layer films of this invention may, if desired, contain a number of optional layers and may be incorporated into a great variety of glazing structures for architectural and transportation system uses. In Fig. 3 a film 30 is shown containing an optional protection layer 32 over filter 12, This layer 32 can typically be a hardcoat, such as a silicon-containing coating which is applied as a liquid and thereafter cured with heat and/or plasma or corona discharge to yield a hard scratch-resistant overcoating. Typical hardcoats are the cured products resulting from heat or plasma treatment of a.) a hydrolysis and condensation product of methyltriethoxysilane; b.) mixtures of poly(silicic acid) and copolymers of fluorinated monomers with compounds containing primary and secondary alcohol groups as described in U.S. Patent Nos. 3,429,845 and 3,429,845, respectively. Other hardcoat layers are described in U.S. Pat. Nos. 3,390,203; 3,514,425; and 3,546,318. These hardcoat layers have thicknesses in the range of a few to a few hundred microns.

In Fig. 4, a preferred configuration 40 for employing the films formed by the method of this invention is depicted. In this embodiment, the filter 12 is deposited on a support 14 as already described. When the support 14 is a flexible plastic it can carry a previously applied hardcoat 42 for scratch resistance. The filter side of the film is then adhered to a transparent substrate 46 such as another film of flexible plastic or a layer of glass or rigid plastic, or the like using an optically acceptable adhesive 44 such as poly(vinyl butyral), ionomer resin, poly(urethane) resin, or polyvinyl chloride resin. Although not wishing to be limited to a particular adhesive, preference is given to the commonly used glass adhesive, poly(vinyl butyral).

The configuration shown in Fig. 4 is of special interest in areas where the film comprises a filter 12 supported on plastic sheet 14 and this is applied to a surface such as the inside surface of a sheet of glass or other rigid material. This can be used as architectural glass, as automotive windshields (when the glass is a suitable tempered or laminated safety glass), automotive side or rear window glass (again with proper tempering, etc), as aircraft canopies, and the like. In these applications, the substrate 46 is the "outside" surface and support 14 can, if desired, be selected to provide antilacerative properties to the resulting final product, as is disclosed in U.S. Pat. No. 3,900,673 which is incorporated herein by reference both for its teachings of antilacerative coatings and for its teachings of the fabrication of safety glass structures.

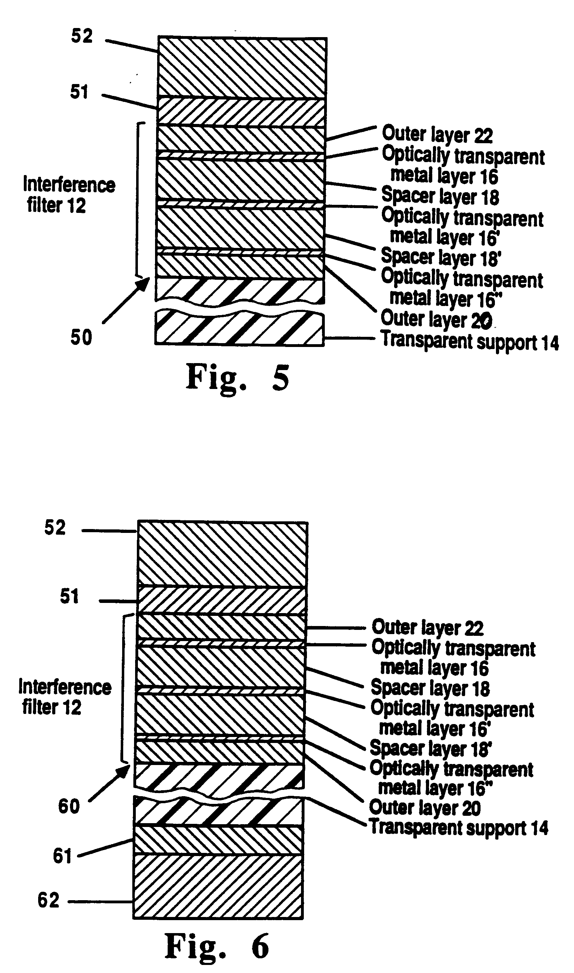

Fig. 5 shows a variation 50 of the product of Fig. 1. Embodiment 50 includes a filter 12 deposited on support 14 as previously described and this combination is attached via adhesive 51 to additional transparent layer 52. If layers 14 and 52 are both glass a very durable product results.

Fig. 6 depicts a variation 60 of the product of Fig. 5 in which layers 14 and 52 are both glass. Embodiment 60 includes an antilacerative coating 62 adhered to the inside surface of support 14 with adhesive layer 61.

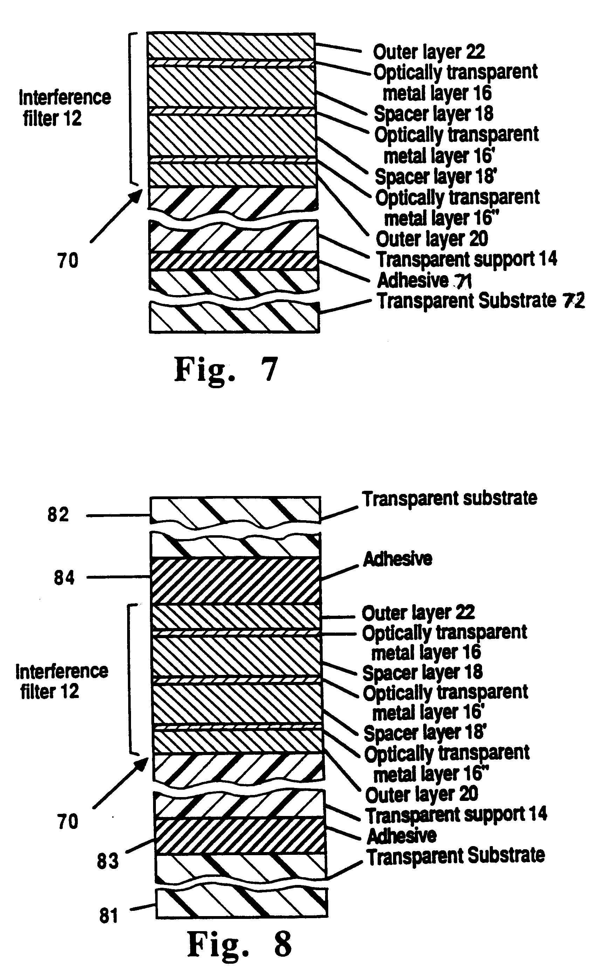

Turning to Fig. 7, another embodiment 70 of the invention is depicted in which the film is adhered to a transparent substrate 72 with an adhesive 71, this time through the transparent support 14. This embodiment has the disadvantage that the filter 12 is potentially physically accessible so that it can be physically damaged if great care is not taken. This can of course be corrected by placing this surface in the interior of a double pane glass unit, or by providing other suitable protection.

Fig. 8 shows yet another embodiment 80. This embodiment 80 includes filter 12 deposited on transparent support (e.g., plastic film) 14. The filter and support are then laminated between two transparent substrates 81 and 82 using adhesive layers 83 and 84, respectively. This configuration has the advantage, when 81 and 82 are glass, of presenting two glass surfaces.

The film products of the invention can also be used in nonlaminated structures, as shown in Fig. 15. In Figure 15, window unit 90 contains a sheet of film 10 stretched under tension between glass panes 65 and 64. 66 and 66' are air voids and 68 and 68' are spacer plugs for holding the film in proper position and properly under tension. This general window structure in which the present filters may be used and the materials and methods of its manufacture are shown in U.S. Patent No. 4,335,166.

An unexpected advantage of the films of the present invention which employ multiple transparent metal layers is their superior efficiency when laminated to a transparent substrate in the configurations shown in Figs. 4, 5, 6, 7 or 8.

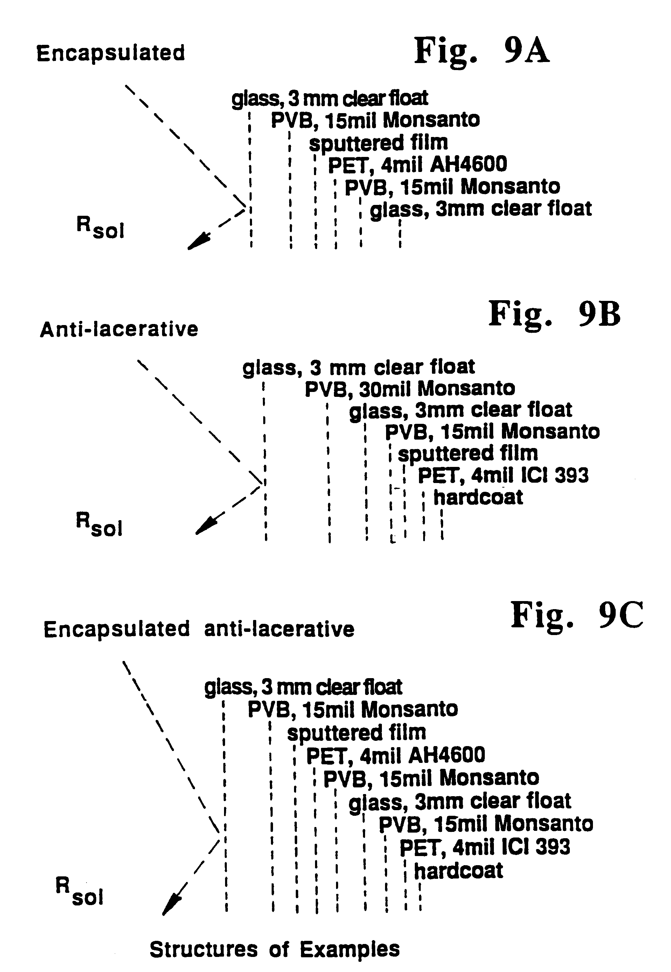

In these configurations, the multiple transparent metal layer filters formed by the method of this invention offer special advantages and efficiencies. When a transparent support-backed single metal layer sandwich filter (i.e. an induced transmission filter) is laminated directly to a second sheet of transparent substrate to give a support-filter-substrate configuration, the filter undergoes a pronounced drop in efficiency. Fig. 9 illustrates that for a single metal layer filter this drop in efficiency is quite pronounced.

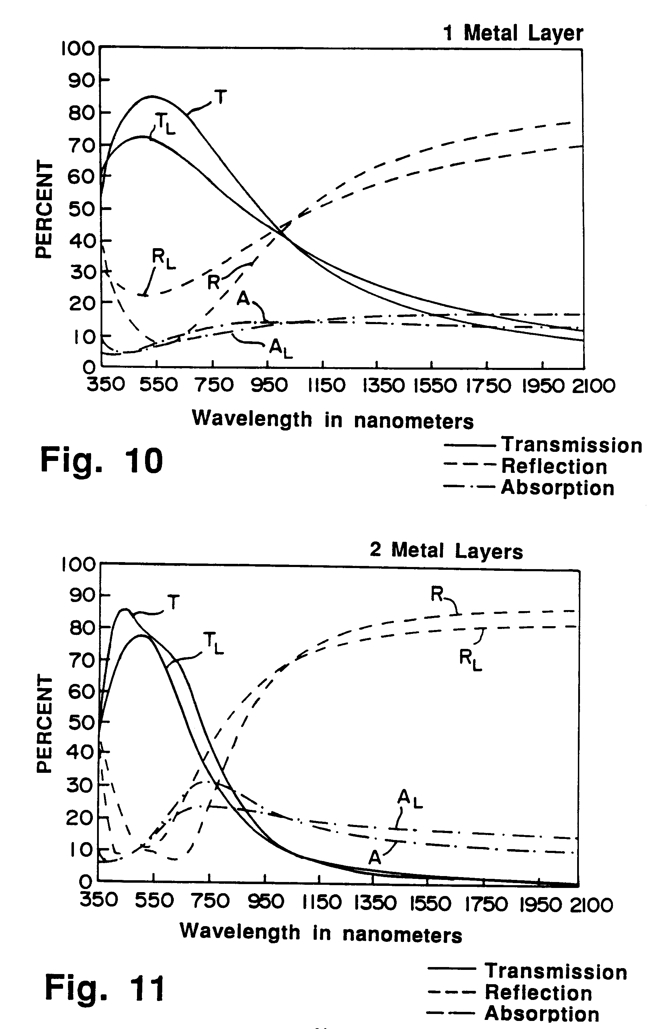

Fig. 10 depicts the transmission and reflectance of visible and infra-red wavelengths by a one metal layer filter with and without lamination to a second transparent layer. In the case shown, this second layer is a second layer of plastic support. By way of comparison, the energy absorbed by this filter with and without lamination is shown as well. Line T is the transmittance curve for the unlaminated film. $T_L$ is the transmittance curve for the laminated film. R and $R_L$ are the corresponding reflectance curves. A and $A_L$ are the absorption curves before and after lamination respectively. This filter has a 100 $\mu$m (4 mil) poly(ethylene terphthalate) (PET) backing having a directly deposited 46 nm thick indium oxide dielectric boundary layer; an 11.8 nm thick layer of sputter-deposited silver topped with another 46 nm thick indium oxide boundary layer. The layer to which this film is laminated is a second sheet of the PET.

As can be seen, the lamination causes transmittance in the visible region to drop markedly while substantially increasing transmittance of energy in the infra-red region. The Tvis value for the filter drops from 82% to 70% when it is laminated. As the same time Tsol only drops from 62% to 55% This illustrates that the filter is not preferentially passing visible wavelengths with the efficiency it did before lamination. This film when laminated provides a Shading Coefficient of 0.67. This is little better than conventional green-tinted glass.

Turning to Fig. 11, comparable curves are presented for a filter formed by the method of the invention having two metal layers. This filter uses the same materials and the same lamination layer used in the filter characterized in Fig. 8. The filter layers are 35nm of dielectric, 10.7 nm of silver, 75nm of dielectric, 10.7 nm of silver and 40 nm of dielectric. The curves are identified as in Fig. 10. One advantage is clear from the curves. In the infra-red region, this filter is much more efficient and does not change appreciably when laminated. When Tvis and Tsol and SC values are determined it is seen that the drop in Tvis is much less pronounced and in fact, relatively less or the same than the drop in Tsol. (Tvis went from 76% to 70%; Tsol went from 45% to 40%.) The SC value for the laminated material is a superior 0.53.

In Fig. 12 the same data are presented for a filter formed by the method of this invention having three sputter-deposited transparent metal layers. This filter uses the same materials used in the filters characterized in Figs. 10 and 9 in a 35 nm dielectric / 7 nm silver / 65 nm dielectric / 10 nm silver / 70 nm dielectric / 9 nm silver / 35 nm dielectric structure. With this filter, the drop in Tvis is relatively less than the drop in Tsol so that the efficiency of the filter was substantially unchanged by lamination. (Tvis went from 74% to 70% and Tsol went from 42% to 38%.) Fig. 13 is an expanded-scale plot of the spectral properties of a 7-layer (3-metal-layer) filter of this configuration repeated with greater precision and confirming the excellent spectral properties which are obtained.

## Methods of Preparation

The films formed by the method of this invention are prepared by laying down a series of uniform continuous layers of metal and dielectric in sequence on a support. These layers can be deposited by physical vapor deposition methods such as thermal evaporation, molecular beam epitaxy, ion-assisted vapor deposition, sputtering and the like; and chemical vapor deposition and plasma assisted vapor deposition methods. The metal layers are preferably laid down using magnetron sputtering. This technique can also be used to lay down the dielectric layers if they are of the inorganic oxide type which is preferred. Importantly, this technique can achieve the desired direct contiguous deposit of the various layers upon one another and upon the support layer without resort to nucleation layers and the like.

This technique and apparatus suitable for carrying out the production of the present materials are both described in detail in U.S. Patent No. 4,204,942 of Charroudi.

Chemical coating or vapor deposition can be used to deposit the dielectric materials. If these methods are used, conventional techniques of thermal evaporation, electron beam evaporation and chemical vapor deposition and the like known to those of skill in the art will be employed.

## Examples

Seven multilayer filter stacks were prepared on plastic substrates. For purposes of the example they were denominated samples A-G. These materials were then adhered to glass layers or laminated between glass layers. In some cases the final products were designed to have anti-lacerative properties.

Design Materials

Substrate

Substrate poly(ethylene terphthalate) (ICI 393) having a thickness of 100 μm (4 mil) with a clear polysiloxane hardcoat was used for the anti-lacerative coatings, coated on the non-hardcoat side. 100 μm (4 mils) was used to achieve anti-lacerative properties. ICI 393 was selected because it maximized the adhesion of hardcoat. Encapsulated coatings were made on a different (no hardcoat) 100 μm (4 mil) polyester (American Hoechst 4600). Encapsulated anti-lacerative samples were made by laminating an uncoated piece of ICI 393 onto an encapsulated sample.

Glass

3 mm clear float glass was used for all laminations. In several later repeats, low iron glass laminations were prepared which showed several percentage points improvement in $R_{sol}$.

Adhesive

381 μm (15 mil) and 682 μm (30 mil) Monsanto PVB were used for all sputtered film laminations for which data are presented. 381 μm (15 mil) and 682 μm (30 mil) DuPont PVB was examined and found to be optically similar. The transmission spectra of laminations without sputtered coatings was measured to determine the variability of absorption with lamination temperature. Laminations were made at 198°C (280°F) and 214°C (300°F).

Sputtered Coating

Indium oxide and silver were used as dielectric and metal respectively. The coatings were laid down in a magnetic sputtering apparatus.

The thickness of the filter layers in samples A-G was as shown in Table 1.

## Table 1
### Layer, thickness, nm

| Sample | Layer | | | | | | |
|--------|-------|-------|-------|-------|-------|-------|-------|
|        | $D_1$ | $M_1$ | $D_2$ | $M_2$ | $D_3$ | $M_3$ | $D_4$ |
| A      | 35    | 10    | 70    | 11    | 70    | 10    | 35    |
| B      | 33    | 10    | 67    | 11    | 67    | 10    | 33    |
| C      | 31    | 10    | 63    | 11    | 63    | 10    | 31    |

(all prepared with hardcoated substrate)

| | | | | | | | |
|--------|-------|-------|-------|-------|-------|-------|-------|
| D      | 35    | 10    | 70    | 11    | 70    | 10    | 35    |
| E      | 33    | 10    | 66    | 11    | 66    | 10    | 33    |
| F      | 31    | 10    | 62    | 11    | 62    | 10    | 31    |
| G      | 29    | 10    | 58    | 11    | 58    | 10    | 29    |

(all prepared without hardcoat on substrate)

$$D_1 = \text{dielectric 1}$$
$$M_1 = \text{metal 1,}$$
$$\text{etc.}$$

These seven filter stacks were then incorporated into glazing structures as shown in Fig. 9. A, B and C were laminated into structures as shown in Fig. 9B. D, E, F and G were made up into 9A and 9C type structures.

In addition to these samples, three comparative samples of three composite laminates were provided. One was a glass / 30 ml PVB / glass composite that had no sputtered filter coating and was intended to simulate current laminated windshields. The second was an anti-lacerative version like 9B, different only in having no sputtered film. The third was a sample of "Easy-Eye" brand, absorbing glass made up into a glass/PVB/glass geometry. These samples were also measured.

Visible transmission and reflection values were measured on a Spectrogard using Illuminant "A" for the A-G materials with and without lamination and for the three comparative materials.

Observations

The results of the color measurements are given in Table 2. These results show that Tvis values of greater than 70% can be achieved with color neutrality using the present invention.

Table 2

| Sample | Tvis,% | Rsol,% | Color Properties of Reflected Light | | |
|---|---|---|---|---|---|
| | | | L | a* | b* |
| A* | 72.6 | 36.7 | 33.25 | 5.47 | 6.72 |
| B* | 71.5 | 35.4 | 34.59 | 6.86 | 7.29 |
| C* | 70.3 | 37.0 | 33.6 | 6.45 | 5.44 |
| A | 73.8 | 24.1 | 33.04 | 0.55 | 1.16 |
| B | 71.8 | 23.3 | 33.15 | -1.19 | 1.87 |
| C | 72.8 | 23.5 | 33.27 | -1.11 | 1.65 |
| D* | 76.5 | | 33.82 | 8.44 | -6.9 |
| E* | 75.9 | | 34.68 | 8.27 | -5.11 |
| F* | 75.6 | | 36.6 | 6.96 | 1.56 |
| G* | 74.9 | 37.6 | 36.84 | 6.19 | 0.12 |
| D | 73.0 | 29.3 | 34.61 | -3.28 | 1.42 |
| E | 71.5 | 29.8 | 34.57 | -3.26 | 1.0 |
| F | 71.9 | 29.9 | 33.34 | -3.11 | 1.1 |
| G | 71.9 | 32.1 | 34.36 | +4.81 | 1.12 |
| Encap-sulated | 84.0 | 7.1 | 33.46 | - .82 | -0.36 |
| Antila-cerative | 83.7 | 8.5 | 34.76 | -2.05 | -3.08 |
| Easy Eye | 75.4 | 6.0 | 31.98 | -2.62 | -1.05 |

*Before lamination

These results also showed that the lamination of the films formed by the method of this invention into composites gave improved color performance. Materials which were not acceptable from a color point of view before lamination were acceptable thereafter. The color properties are also shown in color charts such as Fig.

14.

Fig. 14 shows an L*a*b* color coordinate system and shows the general colors it represents together with the a* and b* values for materials of this invention before and after lamination as taken from Table 1. As can be seen, the color properties became more neutral (that is, move closer to the 0,0 point of the coordinate system) with lamination.

Additionally, when the reflection off materials formed by the method of this invention was inspected at a variety of angles, the materials were observed to have minimal angle sensitivity. That is, the color of the reflection did not change with the angle.

## Claims

1. A method of forming a transparent, infra-red reflecting composite (10) (24) (25) (30) (40) (50) (60) (70) (80) including, adhered to one side of a transparent support (14), a transparent, metal layer-dielectric layer, visible light-transmitting, infra-red reflecting, Fabry-Perot interference filter which includes at least two separate discrete continuous transparent metal layers (16, 16', 16", 16''') separated from one another by a discrete continuous spacer layer (18) (18, 18', 18") of dielectric of inorganic metal oxide, compound or salt; wherein each transparent metal layer is contiguous with and directly adherent to the adjacent spacer layer of dielectric; and wherein the metal and dielectric layers are deposited sequentially onto the transparent support (14), characterised in that sputter-deposition is used as the mechanism for depositing the metal layers without an intervening nucleation layer.

2. A method according to claim 1, wherein the sequential deposition involves the deposition of two or more continuous discrete sputter-deposited transparent metal layers (16, 16') each of which is directly sandwiched between continuous layers (22, 18, 20) of dielectric.

3. A method according to claim 1 or claim 2, wherein said interference filter has a plurality of continuous directly contiguous stacked layers comprising:-
   a dielectric layer (22),
   a discrete sputter-deposited transparent metal layer (16),
   one or more pairs of layers, each pair comprising a dielectric spacer layer (18) (18', 18") (18, 18', 18") and a discrete sputter-deposited transparent metal layer (16') (16', 16") (16', 16", 16'''), and
   a dielectric outer layer (20).

4. A method according to claim 3, wherein the metal layers are deposited to have a thickness of from 4 to 40 nm and the dielectric layers are deposited to have a thickness of from 40 to 200 nm, and the metal layers each comprise metal selected from the group consisting of silver, gold, platinum, palladium, aluminium, copper and nickel and alloys thereof.

5. A method according to claim 4, wherein the metal layers are each sputter-deposited of silver and each is from 4 to 17 nm in thickness, and the dielectric layers each have an index of refraction of from 1.75 to 2.25, with the spacer layers having a thickness of from 70 to 100 nm and the outer layers having a thickness of from 30 nm to 70 nm.

6. A method according to claim 1, wherein the interference filter (12) is made up of a multi-layer stack including at least three separate discrete continuous transparent metal layers (16, 16', 16") (16, 16', 16", 16''') separated from one another by discrete continuous layers (18, 18') (18, 18', 18") of dielectric.

7. A method according to claim 6 comprising depositing a separate and discrete continuous boundary layer (20) of dielectric on the multi-layer stack.

8. A method according to claim 7 comprising depositing two separate and discrete continuous boundary layers (20, 22) of dielectric at the outside of said stack.

9. A method according to any one of claims 1 and 6 to 8, wherein in the multi-layer stack the transparent metal layers are deposited to be contiguous with and directly adherent to the subsequently deposited dielectric layer, without intervening nucleation layers being deposited.

10. A method according to any one of claims 1 to 9, and comprising adhering a hard coat layer (42) to the side of the support (14) which does not have the filter (12) adhered thereto.

11. A method according to claim 1, wherein said filter is deposited as a seven layer interference filter, each of the seven layers comprising a continuous discrete layer sputter-deposited directly contiguous with adjacent layers, and wherein the first (22), third (18), fifth (18′) and seventh (20) layers are dielectric layers and the second (16), fourth (16′) and sixth (16″) layers are transparent metal layers.

12. A method of forming a glazing comprising a transparent structural sheet member (81) having two sides and a surrounding edge, and adhering to one of said sides a colour-corrected infra-red reflecting composite made by the method of any one of claims 6 to 10.

13. A method according to claim 12, wherein the metal layers (16, 16′, 16″) are each sputter-deposited of silver with a thickness of from 4 to 17 nm; wherein the dielectric layers each have an index of refraction of from 1.75 to 2.25; and wherein the spacer layers (18, 18′) of the dielectric material have a thickness of from 70 to 100 nm and the boundary layers (20, 22) of dielectric material have a thickness of from 30 to 70 nm.

14. A method according to claim 13, wherein the sheet member (72) (81) is a plastics sheet, and the composite (70) is directly adhered to the surface of the plastics sheet, and including the step of adhering the glazing to a transparent substrate (82) of glass.

15. A method according to claim 12, wherein the sheet member (72) (81) is a plastics sheet, and the composite (70) is adhered to the surface of the plastics material, and including the step of laminating the glazing between two parallel sheets (81, 82) formed of plastics material or of glass.

16. A method according to claim 15, wherein low iron glass is chosen for the parallel sheets (81, 82).

17. A method according to any one of claims 1 to 16 comprising using a plastics material for the transparent support (14).

18. A method according to any one of claims 1 to 17, and additionally adhering a protective layer (62) (72) (81) to the side of the transparent support (14) which does not have the transparent metal layer-dielectric layer filter adhered thereto.

**Patentansprüche**

1. Verfahren zur Herstellung eines transparenten, infrarotreflektierenden Verbundstoffs (10, 24, 25, 30, 40, 50, 60, 70, 80), umfassend ein transparentes, aus einer Metallschicht und einer dielektrischen Schicht bestehendes, für sichtbares Licht durchlässiges, infrarotreflektierendes Fabry-Pérot-Interferenzfilter, das auf eine Seite eines transparenten Trägers (14) aufgebracht ist und mindestens zwei getrennte, diskrete, durchgehende transparente Metallschichten (16, 16′, 16″, 16‴) umfaßt, die voneinander durch eine diskrete durchgehende Abstandsschicht (18) (18, 18′, 18″) aus einem Dielektrikum aus einem anorganischen Metalloxid, einer anorganischen Metallverbindung oder einem anorganischen Metallsalz getrennt sind; wobei jede transparente Metallschicht an die benachbarte Abstandsschicht aus einem Dielektrikum angrenzt und direkt auf diese aufgebracht ist; und wobei die Metallschicht und die dielektrische Schicht nacheinander auf den transparenten Träger (14) aufgetragen werden, dadurch gekennzeichnet, daß die Metallschichten durch Vakuumzerstäubung aufgebracht werden, ohne störende Keimbildungsschicht.

2. Verfahren nach Anspruch 1, bei dem das sequentielle Auftragen das Auftragen von zwei oder mehr durchgehenden diskreten, durch Vakuumzerstäuben aufgebrachten transparenten Metallschichten (16, 16′) umfaßt, von denen jede direkt sandwichartig zwischen durchgehenden Schichten (22, 18, 20) aus einem Dielektrikum angeordnet wird.

3. Verfahren nach Anspruch 1 oder Anspruch 2, bei dem das Interferenzfilter eine Vielzahl von durchgehenden, direkt aneinandergrenzenden, übereinanderliegenden Schichten aufweist, die folgendes umfassen: eine dielektrische Schicht (22),

eine diskrete, durch Vakuumzerstäuben aufgebrachte transparente Metallschicht (16),
ein oder mehrere Paare von Schichten, wobei jedes Paar eine dielektrische Abstandsschicht (18) (18′, 18″) (18, 18′, 18″) und eine diskrete, durch Vakuumzerstäuben aufgebrachte transparente Metallschicht (16′) (16′, 16″) (16′, 16″, 16‴) umfaßt, und
eine dielektrische äußere Schicht (20).

4. Verfahren nach Anspruch 3, bei dem die Metallschichten in einer Dicke von 4 bis 40 nm und die dielektrischen Schichten in einer Dicke von 40 bis 200 nm aufgetragen werden, und bei dem die Metallschichten jeweils aus einem Metall bestehen, das ausgewählt ist aus der Gruppe umfassend Silber, Gold, Platin, Palladium, Aluminium, Kupfer und Nikkel und Legierungen derselben.

5. Verfahren nach Anspruch 4, bei dem die Metallschichten jeweils durch Vakuumzerstäuben von Silber aufgetragen werden und jeweils eine Dicke von 4 bis 17 nm besitzen, und bei dem die dielektrischen Schichten jeweils einen Brechungsindex von 1,75 bis 2,25 aufweisen, wobei die Abstandsschichten eine Dicke von 70 bis 100 nm und die äußeren Schichten eine Dicke von 30 nm bis 70 nm besitzen.

6. Verfahren nach Anspruch 1, bei dem das Interferenzfilter (12) aus einem mehrschichtigen Stapel besteht, umfassend mindestens drei getrennte, durchgehende transparente Metallschichten (16, 16′, 16″) (16, 16′, 16″, 16‴), die voneinander durch diskrete durchgehende Schichten (18, 18′) (18, 18′, 18″) aus einem Dielektrikum getrennt sind.

7. Verfahren nach Anspruch 6, umfassend das Auftragen einer getrennten und diskreten durchgehenden Grenzschicht (20) aus einem Dielektrikum auf den mehrschichtigen Stapel.

8. Verfahren nach Anspruch 7, umfassend das Auftragen von zwei getrennten und diskreten durchgehenden Grenzschichten (20, 22) aus einem Dielektrikum auf die Außenseite des Stapels.

9. Verfahren nach einem der Ansprüche 1 und 6 bis 8, bei dem in dem mehrschichtigen Stapel die transparenten Metallschichten so aufgetragen werden, daß sie an die anschließend aufgetragene dielektrische Schicht angrenzen und direkt auf dieser haften, ohne daß störende Keimbildungsschichten aufgetragen werden.

10. Verfahren nach einem der Ansprüche 1 bis 9, bei dem eine harte Überzugsschicht (42) auf diejenige Seite des Trägers (14) aufgebracht wird, auf die das Filter (12) nicht aufgebracht ist.

11. Verfahren nach Anspruch 1, bei dem das Filter als aus sieben Schichten bestehendes Interferenzfilter aufgetragen wird, wobei jede der sieben Schichten eine durchgehende diskrete Schicht umfaßt, die durch Vakuumzerstäuben direkt angrenzend an benachbarte Schichten aufgetragen wurde, und wobei die erste (22), dritte (18), fünfte (18′) und siebente (20) Schicht eine dielektrische Schicht ist, und die zweite (16), vierte (16′) und sechste (16″) Schicht eine transparente Metallschicht ist.

12. Verfahren zur Herstellung einer Verglasung bestehend aus einem transparenten Strukturfolienelement (81) mit zwei Seiten und einer Umfangskante, wobei auf eine der Seiten ein farbkorrigierter, infrarotreflektierender Verbundstoff aufgebracht ist, der mit dem Verfahren nach einem der Ansprüche 6 bis 10 hergestellt wurde.

13. Verfahren nach Anspruch 12, bei dem die Metallschichten (16, 16′, 16″) jeweils durch Vakuumzerstäuben von Silber in einer Dicke von 4 bis 17 nm aufgetragen werden; bei dem die dielektrischen Schichten jeweils einen Brechungsindex von 1,75 bis 2,25 besitzen; und bei dem die Abstandsschichten (18, 18′) aus dem dielektrischen Material eine Dicke von 70 bis 100 nm und die Grenzschichten (20, 22) aus dielektrischem Material eine Dicke von 30 bis 70 nm besitzen.

14. Verfahren nach Anspruch 13, bei dem das Folienelement (72, 81) eine Kunststofffolie ist, und der Verbundstoff (70) direkt auf die Oberfläche der Kunststofffolie aufgebracht wird, und bei dem außerdem die Verglasung auf ein transparentes Substrat (82) aus Glas aufgebracht wird.

15. Verfahren nach Anspruch 12, bei dem das Folienelement (72, 81) eine Kunststofffolie ist, und bei dem der Verbundstoff (70) auf die Oberfläche des Kunststoffmaterials aufgebracht wird, und bei dem außerdem die Verglasung zwischen zwei parallelen Lagen (81, 82) aus Kunststoffmaterial oder Glas aufkaschiert wird.

16. Verfahren nach Anspruch 15, bei dem Glas mit niedrigem Eisengehalt für die parallelen Lagen (81, 82) gewählt wird.

17. Verfahren nach einem der Ansprüche 1 bis 16, umfassend die Verwendung eines Kunststoffmaterials für den transparenten Träger (14).

18. Verfahren nach einem der Ansprüche 1 bis 17, und außerdem das Aufbringen einer Schutzschicht (62, 72, 81) auf diejenige Seite des transparenten Trägers (14), die nicht mit dem transparenten, aus der Metallschicht und der dielektrischen Schicht bestehenden Filter versehen ist.

## Revendications

1. Procédé de formation d'un composite transparent, réfléchissant les rayons infrarouges (10) (24) (25) (30) (40) (50) (60) (70) (80) comprenant, collé à un côté d'un support transparent (14), un filtre d'interférence de Fabry et Perrot, transparent, à couches métalliques-couches diélectriques, transmettant à la lumière visible, réfléchissant les rayons infrarouges, qui comprend au moins deux couches métalliques transparentes, continues, distinctes, séparées (16, 16′, 16″, 16‴) séparées l'une de l'autre par une couche d'écartement continue, distincte (18) (18, 18′, 18″) constitué d'un oxyde, d'un composé ou d'un sel métallique minéral diélectrique; dans lequel chaque couche métallique transparente est contiguë à la couche d'écartement adjacente de matériau diélectrique et directement collée à celle-ci; et dans lequel les couches métalliques et diélectriques sont déposées successivement sur le substrat transparent (14), caractérisé en ce qu'on utilise le dépôt par pulvérisation comme mécanisme pour le dépôt des couches métalliques sans couche de nucléation intermédiaire

2. Procédé selon la revendication 1, dans lequel le dépôt successif comprend le dépôt de deux couches (16, 16′) ou plus, métalliques, transparentes, continues, distinctes, déposées par pulvérisation, chacune de celles-ci étant placée directement en sandwich entre des couches continues (22, 18, 20) de matériau diélectrique.

3. Procédé selon la revendication 1 ou la revendication 2, dans lequel ledit filtre d'interférence a plusieurs couches empilées, continues, directement contiguës, comprenant:
   une couche diélectrique (22),
   une couche métallique transparente, distincte, déposée par pulvérisation (16),
   une ou plusieurs paires de couches, chaque paire comprenant une couche d'écartement diélectrique (18) (18′, 18″), (18, 18′, 18″) et une couche métallique transparente, distincte, déposée par pulvérisation (16′) (16′ 16″)(16′, 16″, 16‴) et
   une couche diélectrique extérieure (20).

4. Procédé selon la revendication 3, dans lequel les couches métalliques sont déposées de manière à présenter une épaisseur de 4 à 40 nm et les couches diélectriques sont déposées de manière à présenter une épaisseur de 40 à 200 nm, et les couches métalliques comprennent chacune un métal choisi parmi l'argent, l'or, le platine, le palladium, l'aluminium, le cuivre et le nickel et des alliages de ceux-ci.

5. Procédé selon la revendication 4, dans lequel les couches métalliques sont chacune déposées par pulvérisation d'argent et présentent chacune une épaisseur de 4 à 17 nm, et les couches diélectriques présentent chacune un indice de réfraction de 1,75 à 2,25, les couches d'écartement ayant une épaisseur de 70 à 100 nm et les couches extérieures ayant une épaisseur de 30 nm à 70 nm.

6. Procédé selon la revendication 1, dans lequel le filtre d'interférence (12) est fait d'une pile de plusieurs couches comprenant au moins trois couches métalliques transparentes, continues, distinctes, séparées (16, 16′, 16″) (16, 16′, 16″, 16‴) séparées les unes des autres par des couches continues distinctes (18, 18′), (18, 18′, 18″) de matériau diélectrique.

7. Procédé selon la revendication 6, comprenant l'étape consistant à déposer une couche limite continue, séparée et distincte (20) de matériau diélectrique sur la pile de plusieurs couches.

8. Procédé selon la revendication 7, comprenant l'étape consistant à déposer deux couches limites continues, séparées et distinctes (20, 22) de matériau diélectrique à l'extérieur de ladite pile.

9. Procédé selon l'une quelconque des revendications 1 et 6 à 8, dans lequel, dans la pile de plusieurs couches, les couches métalliques transparentes sont déposées de manière à être contiguës à la couche de matériau diélectrique déposée ensuite et directement collées à celle-ci sans que soient déposées de couches de nucléation intermédiaires.

10. Procédé selon l'une quelconque des revendications 1 à 9, et comprenant l'étape consistant à coller une couche de revêtement dure (42) du côté du support (14) auquel le filtre (12) n'est pas collé.

11. Procédé selon la revendication 1, dans lequel ledit filtre est déposé sous forme d'un filtre d'interférence à sept couches, chacune des sept couches comprenant une couche continue, distincte, déposée par pulvérisation, directement contiguë aux couches adjacentes, et dans lequel les première (22), troisième (18), cinquième (18') et septième (20) couches sont des couches diélectriques et la seconde (16), la quatrième (16') et la sixième (16") couches sont des couches métalliques transparentes.

12. Procédé de formation d'un vitrage comprenant un élément (81) structural transparent, sous forme de feuille, ayant deux côtés et un bord qui l'entoure et, collé à l'un desdits côtés, un composite réfléchissant les rayons infrarouges, à couleur corrigée, obtenu par le procédé selon l'une quelconque des revendications 6 à 10.

13. Procédé selon la revendication 12, dans lequel les couches métalliques (16, 16' 16") sont chacune déposées par pulvérisation d'argent sur une épaisseur de 4 à 17 nm; dans lequel les couches diélectriques présentent chacune un indice de réfraction de 1,75 à 2,25; et dans lequel les couches d'écartement (18, 18') du matériau diélectrique présentent une épaisseur de 70 à 100 nm et les couches limites (20, 22) de matériau diélectrique présentent une épaisseur de 30 nm à 70 nm.

14. Procédé selon la revendication 13, dans lequel l'élément (72) (81) en forme de feuille est une feuille de matière plastique, et le composite (70) est directement collé à la surface de la feuille de matière plastique, et qui comprend l'étape consistant à coller le vitrage à un support transparent (82) en verre.

15. Procédé selon la revendication 12, dans lequel l'élément (72) (81) en forme de feuille est une feuille de matière plastique, et le composite (70) est collé à la surface de la matière plastique, et qui comprend l'étape consistant à former un stratifié du vitrage entre deux feuilles parallèles (81,82) formées de matière plastique ou de verre.

16. Procédé selon la revendication 15, dans lequel on choisit du verre à faible teneur en fer pour les feuilles parallèles (81,82).

17. Procédé selon l'une quelconque des revendications 1 à 16, comprenant l'utilisation d'une matière plastique pour le support transparent (14).

18. Procédé selon l'une quelconque des revendications 1 à 17, et comprenant l'étape supplémentaire consistant à coller une couche protectrice (62) (72) (81) du côté du support transparent (14) auquel n'est pas collé le filtre transparent à couches métalliques-couches diélectriques.

Fig. 1A

Interference filter 12

10

- Outer layer 22
- Optically transparent metal layer 16
- Spacer layer 18
- Optically transparent metal layer 16'
- Boundary layer 20
- Transparent support 14

Fig. 1B

Interference filter 12

24

- Outer layer 22
- Optically transparent metal layer 16
- Spacer layer 18
- Optically transparent metal layer 16'
- Spacer layer 18'
- Optically transparent metal layer 16''
- Outer layer 20
- Transparent support 14

Fig. 2

Interference filter 12

25

- Outer layer 22
- Optically transparent metal layer 16
- Spacer layer 18
- Optically transparent metal layer 16'
- Spacer layer 18'
- Optically transparent metal layer 16''
- Spacer layer 18''
- Optically transparent metal layer 16'''
- Outer layer 20
- Transparent support 14

**Fig. 3**

Protection layer 32

Interference filter 12

Outer layer 22
Optically transparent metal layer 16
Spacer layer 18
Optically transparent metal layer 16'
Spacer layer 18'
Optically transparent metal layer 16"
Outer layer 20

30

Transparent support 14

**Fig. 4**

Transparent substrate 46

Adhesive 44

Interference filter 12

Outer layer 22
Optically transparent metal layer 16
Spacer layer 18
Optically transparent metal layer 16'
Spacer layer 18'
Optically transparent metal layer 16"
Outer layer 20

40

Transparent support 14
Hard coat 42

52
51
Interference
filter 12
50

Outer layer 22
Optically transparent
metal layer 16
Spacer layer 18
Optically transparent
metal layer 16'
Spacer layer 18'
Optically transparent
metal layer 16"
Outer layer 20
Transparent support 14

**Fig. 5**

52
51
Interference
filter 12
60
61
62

Outer layer 22
Optically transparent
metal layer 16
Spacer layer 18
Optically transparent
metal layer 16'
Spacer layer 18'
Optically transparent
metal layer 16"
Outer layer 20
Transparent support 14

**Fig. 6**

Interference filter 12

70

Outer layer 22
Optically transparent metal layer 16
Spacer layer 18
Optically transparent metal layer 16'
Spacer layer 18'
Optically transparent metal layer 16"
Outer layer 20
Transparent support 14
Adhesive 71
Transparent Substrate 72

## Fig. 7

82 — Transparent substrate

84 — Adhesive

Interference filter 12

70

83

81

Outer layer 22
Optically transparent metal layer 16
Spacer layer 18
Optically transparent metal layer 16'
Spacer layer 18'
Optically transparent metal layer 16"
Outer layer 20
Transparent support 14
Adhesive
Transparent Substrate

## Fig. 8

**Encapsulated**                              **Fig. 9A**

glass, 3 mm clear float
PVB, 15mil Monsanto
sputtered film
PET, 4mil AH4600
PVB, 15mil Monsanto
glass, 3mm clear float

$R_{sol}$

**Fig. 9B**

**Anti-lacerative**

glass, 3 mm clear float
PVB, 30mil Monsanto
glass, 3mm clear float
PVB, 15mil Monsanto
sputtered film
PET, 4mil ICI 393
hardcoat

$R_{sol}$

**Fig. 9C**

**Encapsulated anti-lacerative**

glass, 3 mm clear float
PVB, 15mil Monsanto
sputtered film
PET, 4mil AH4600
PVB, 15mil Monsanto
glass, 3mm clear float
PVB, 15mil Monsanto
PET, 4mil ICI 393
hardcoat

$R_{sol}$

**Structures of Examples**

**1 Metal Layer**

Wavelength in nanometers

## Fig. 10

——— Transmission
- - - Reflection
—·— Absorption

**2 Metal Layers**

Wavelength in nanometers

## Fig. 11

——— Transmission
- - - Reflection
—·— Absorption

**3 Metal Layers**

## Fig. 12

Transmission
Reflection
Absorption

## Fig. 13

Fig. 15

Fig. 14